# EUROPEAN PATENT SPECIFICATION

(11) **EP 4 292 994 B1**
(45) Date of publication and mention of the grant of the patent: **04.02.2026**
(21) Application number: 22893945.0
(22) Date of filing: 12.12.2022
(51) Int. Cl.: C04B 28/04, C04B 22/14

(54) **LOW-PH-VALUE CEMENTING MATERIAL AND PREPARATION METHOD THEREFOR**
ZEMENTIERMATERIAL MIT NIEDRIGEM PH-WERT UND HERSTELLUNGSVERFAHREN DAFÜR
MATÉRIAU DE CIMENTATION À FAIBLE VALEUR DE PH ET SON PROCÉDÉ DE PRÉPARATION

(30) Priority: 24.04.2022 CN 202210451297
(43) Date of publication of application: 20.12.2023
(73) Proprietor: Beijing Research Institute of Uranium Geology, Beijing 100029 (CN); China Institute of Water Resources and Hydropower Research, Beijing 100038 (CN)
(72) Inventor: WANG, Ju, Beijing 100029 (CN); CHEN, Liang, Beijing 100029 (CN); LU, Wei, Beijing 100038 (CN); ZHAO, Weiquan, Beijing 100038 (CN); ZHOU, Jianhua, Beijing 100038 (CN); MA, Hongsu, Beijing 100029 (CN); ZHAO, Xingguang, Beijing 100029 (CN); LIU, Jian, Beijing 100029 (CN); ZHANG, Xiang, Beijing 100038 (CN); LU, Xin, Beijing 100038 (CN); WANG, Yufang, Beijing 100038 (CN); REN, Zengzeng, Beijing 100038 (CN)
(74) Representative: Bayramoglu et al.
(86) International application number: PCT/CN2022/138357
(87) International publication number: WO 2023/207125

(56) References cited:
- CN-A- 102 219 459
- CN-A- 104 529 336
- CN-A- 105 669 109
- CN-A- 106 242 446
- CN-A- 109 516 737
- CN-A- 113 248 209
- CN-A- 114 656 222
- FR-A1- 3 031 103
- JP-A- 2000 065 992
- JP-A- 2000 143 326
- JP-A- 2016 034 893
- US-A1- 2020 079 693
- CODINA ET AL: "Design and characterization of low-heat and low-alkalinity cements", CEMENT AND CONCRETE RESEARCH, PERGAMON PRESS, ELMSFORD, NY, US, vol. 38, no. 4, 20 February 2008 (2008-02-20), pages 437 - 448, XP022505267, ISSN: 0008-8846, DOI: 10.1016/J.CEMCONRES.2007.12.002
- CAU DIT COUMES C ET AL: "Formulating a low-alkalinity, high-resistance and low-heat concrete for radioactive waste repositories", CEMENT AND CONCRETE RESEARCH, PERGAMON PRESS, ELMSFORD, NY, US, vol. 36, no. 12, 1 December 2006 (2006-12-01), pages 2152 - 2163, XP025011847, ISSN: 0008-8846, [retrieved on 20061201], DOI: 10.1016/J.CEMCONRES.2006.10.005

## Description

### TECHNICAL FIELD

The present invention relates to the technical field of building materials, and in particular to a low-pH value cementing material and a preparation method therefor.

### BACKGROUND

The safe disposal of a large amount of high-level radioactive waste generated during the development and utilization of nuclear energy is the last link in the nuclear industry chain and is crucial to the sustainable development of the nuclear industry. Because the high-level radioactive waste can remain radioactive for thousands to hundreds of thousands of years, the internationally recognized safe, reliable and long-term disposal plan is to build a high-level radioactive waste disposal repository in a rock mass 500 m to 1000 m underground. High-level radioactive waste is permanently isolated from the human living environment through artificial barrier systems such as storage tanks and bentonite. In order to prevent the failure of the bentonite protective layer caused by the high pH value of the groundwater infiltrated into the disposal repository, the pH value of the cement-based cementing materials used to plug cracks and backfill chambers in the construction of the disposal repository must be reduced to less than or equal to 11 within a certain period of time after the material is hardened.

It is well known that the main components of cement clinker are tricalcium silicate, dicalcium silicate, tricalcium aluminate, and tetracalcium aluminoferrite, which, when hydrated, generate a large amount of calcium hydroxide, the solution is alkaline. A water dissolution method may be used to measure a pH value of the cementing material prepared by taking common Portland cement as a base material, namely, the material cured under standard conditions is dried in the shade, crushed and ground, a sample is weighed, the sample and water (distilled water) are mixed according to a water-solid ratio of 10: 1 at a temperature of 20±2 °C, then the mixture is stirred at a high speed for 30 min, and a pH value of filtrate is measured by a pH meter after the mixture is filtered by a dry filter paper. The measured data and public literature reports show that the pH value of the common Portland cement is still about 12.5 within a few years, which cannot meet the requirements for the construction of a high-level radioactive waste disposal repository.

The main method to reduce the pH value of the cement-based cementing materials is to add active materials to consume calcium hydroxide generated during cement hydration or change cement clinker, so that no or less calcium hydroxide is generated during cement hydration . So far, there are many patent documents related to low-pH value concrete or cementing materials and preparation methods therefor, for example,

Chinese Patent No. CN107311576A discloses a low-alkalinity ecological concrete and a preparation method therefor, wherein the low-alkalinity ecological concrete comprises the following components in parts by weight: 40-60 parts of sludge ceramsite, 15-30 parts of sulphoaluminate cement, 2-7.5 parts of a water-reducing admixture, 10-20 parts of fly ash, 7-15 parts of slag fine powder, 3-8 parts of plant ash, 1-5 parts of aluminum sulfate, and 10-25 parts of water. The material has a pH value of less than 11, and has the same mechanical property as common concrete, and has biological applicability which is not available in common materials.

Chinese Patent No. CN107548949A discloses a low-alkalinity cementing material for plant-growing concrete and a preparation method therefor, wherein the low-alkalinity cementing material comprises the following components in parts by weight: 60-100 parts of superfine slag powder, 20-30 parts of Portland cement, 0-20 parts of a modified component, 5-20 parts of waste mortar, 0.05-0.5 parts of waste rubber particles, 0-1 parts of expanded perlite, and 0.1-2 parts of a water-reducing admixture. The material takes silicate as an auxiliary cementing material, and the pH value of a cured soaking solution is 9.0-9.5, which can provide growth conditions for plants.

Chinese Patent No. CN101439939A discloses a low alkalinity cementing material for manufacturing concrete artificial fish reef and a preparation method therefor, wherein the material comprises the following components in parts by weight: 40-60 parts of blast furnace water quenching slag, 5-25 parts of fly ash or furnace slag and the like, 10-30 parts of natural dihydrate gypsum or anhydrite and the like, and 1-5 parts of ferric sulfate or ferrous sulfate and the like. The material does not generate calcium hydroxide after hydration, and the prepared concrete can quickly have the same pH value as seawater on the surface in a natural sea area, which is beneficial to the reproduction of aquatic organisms.

Chinese Patent No. CN106242490A discloses a low-pH value superfine phosphoaluminate cement-based grouting material, wherein the material comprises the following components in parts by weight: 45-55 parts of phosphoaluminate cement, 25-35 parts of fly ash, 5-15 parts of slag, 5 parts of a dispersant, 0.5-1 parts of polycarboxylic acid water-reducing admixture, and 1 part of an expanding agent, wherein the prepared grouting material has a pH value of less than or equal to 11, has the characteristics of high fluidity and high grouting property, and has micro-expansibility.

The low alkalinity sulphoaluminate cement specified in the National Standard of Sulphoaluminate Cement (GB20472) is mainly made of sulfate cement, limestone, and gypsum, has an alkalinity pH value of less than or equal to 10.5 and the characteristics of low alkalinity.

In the above technologies, the low-pH value cementing materials mainly use sulphoaluminate cement or a small amount of Portland cement as base materials. However, in the construction of a high-level radioactive waste disposal repository, in order to ensure safety and reliability, the cementing materials which are generally accepted and used internationally still take common Portland cement with a long-term application history as a main base material. The results of foreign research and practice (Cau Dit Coumes, C., Courtois, S., Nectoux, D., Leclercq, S., & Bourbon, X. (2006). Formulating a low-alkalinity, high-resistance and low-heat concrete for radioactive waste repositories. Cement and Concrete Research, 36(12), 2152-2163. available online as https://www.sciencedirect.com/science/article/abs/pii/S0008884606002481?via%3Dihub) have shown that the pH value of the cementing material prepared by adding a large amount of silica fumes (more than 40% by weight) into common Portland cement can be reduced to less than or equal to 11 at about day 150, and the pH value of the material is basically not changed when the fly ash or ground granulated blast furnace slag with the same proportion is singly added. However, the specific surface area of the silica fumes is 80-100 times that of cement, and after the silica fumes are added in a large amount, a large amount of water-reducing admixture is required to be added for ensuring the fluidity, and the series problems of large viscosity, low early strength, high plastic shrinkage cracking risk, and the like of a cementing material are brought, consequently, the rock mass crack plugging and chamber backfilling effects of a disposal reservoir are influenced.

China has officially launched the construction of underground research laboratories for high-level radioactive waste disposal in 2021. At present, there is no cementing material which is prepared by taking common silicate cement as a main base material and has a pH value of less than 11 after hardening in China. It is necessary and urgent to research and develop a low-pH value cementing material for the construction of a high-level radioactive waste disposal repository.

CN 105669109 A relates to a formula of a cement material, and specifically relates to a high-level radioactive waste geological repository special-purposed low-alkali cement. According to the invention, a dry blend is prepared with ordinary Portland cement, silica fume and a coagulation accelerator according to a certain ratio. The mass ratio of the ordinary Portland cement to silica fume to the coagulation accelerator in the dry blend is 1:(0.2-0.3):(0.05-0.1). The low-alkali cement provided by the invention can be used in reinforcement and sealing of repository engineered barriers. With the cement, the requirement of long-term safety of high-level radioactive waste geological disposal can be satisfied.

### SUMMARY

In view of this, the present invention provides a low-pH value cementing material and a preparation method therefor. The cementing material invented takes the common Portland cement which is generally accepted internationally as a main base material, which not only solves the problems of high viscosity, low early strength, high plastic shrinkage cracking risk, and the like caused by the fact that more than 40% of silica fumes are added in the cement in the prior art abroad, but also can adjust a speed of pH value reduction and the required age that the pH value is less than 11 and improve the mechanical property by changing the addition amount of the modified material in the cementing material, so that different requirements in the construction of high-level radioactive waste disposal repository are met. The cementing material provides support for constructing an internationally advanced high-level radioactive waste disposal repository in China.

The present invention is defined by the appended claims.

It can be known from the technical solutions that, compared with the prior art, the present invention has the following beneficial effects.
1. The low-pH value cementing material and the preparation method therefor of the present invention take common Portland cement which is commonly accepted and applied in the construction process of international high-level radioactive waste disposal repository as a main base material, and the material has long-term and wide application practice, and has high reliability.
2. Compared with the ratio (according to the parts by weight: 60 parts of common Portland cement and 40 parts of silica fumes) of foreign public reports (Bodén, A., & Sievänen, U. (2005). Low-pH injection grout for deep repositories: Summary report from a co-operation project between NUMO (Japan), Posiva (Finland) and SKB (Sweden). SwedPower AB / JP-Suoraplan Oy available online as https://skb.com/publication/978895), the cementing material provided by the present invention uses different modified material ratios:
   (1) The pH value of the material is rapidly reduced. The pH value of the material can be less than or equal to 11.50 within 28 days, the required age period for reducing the pH value to less than or equal to 11 is shortened to be within 90 days from 150 days, and the compressive strength of the material is improved by 35.0%, 14.6% and 1.9% at day 3, day 7 and day 28, respectively;
   (2) the maximum compressive strength of the material at the age of 3 days is increased by 69.3% while the pH value of the material is reduced to less than or equal to 11 within 150 days; and
   (3) the maximum addition proportion of the silica fumes in the cementing material can be reduced to 25% from 40%, and the fluidity of the material is significantly improved.
3. Compared with pure cement materials, the cementing material provided by the present invention can realize the effect of basically not losing or even improving the compressive strength of the material at day 3, day 7, and day 28.
4. The cementing material obtained by the technical solution of the present invention not only meets the requirement that the pH value in a high-level radioactive waste disposal repository is less than 11, but also can adjust the required age that the pH value is reduced to less than or equal to 11 and improve the fluidity and mechanical property of the material by changing the matching proportion according to actual requirements, so that different functional requirements of the high-level radioactive waste disposal repository are met, and performance advantages are significant.

### BRIEF DESCRIPTION OF THE DRAWINGS

In order to more clearly illustrate the technical solutions in the embodiments of the present invention or in the prior art, the tables and the drawings required to be used in the description of the embodiments or the prior art are briefly introduced below. It is obvious that the tables and the drawings in the description below are merely embodiments of the present invention, and those of ordinary skill in the art can also obtain other similar results based on the results provided by the present invention without making creative efforts, so these tables and drawings should not be understood as limiting the protection scope of the present invention, which is defined by the claims.

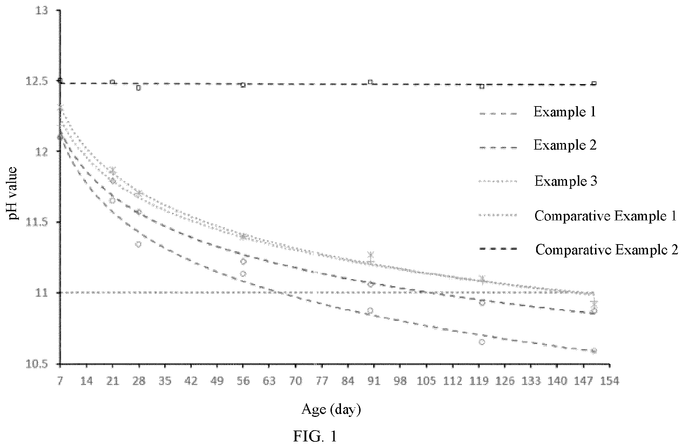

FIG. 1 shows a change trend of a pH value of cementing materials according to Examples 1 to 3 and Comparative Examples 1 to 2 with the curing age;
FIG. 2 shows a scanning electron micrograph of a cementing material according to Example 1 of the present invention, which is crushed to a particle size of less than 0.075 mm and aged for 90 days;
FIG. 3 shows a scanning electron micrograph of a cementing material according to Example 3 of the present invention, which is crushed to a particle size of less than 0.075 mm and aged for 150 days;
FIG. 4 shows a scanning electron micrograph of a cementing material according to Example 5 of the present invention, which is crushed to a particle size of less than 0.075 mm and aged for 150 days; and

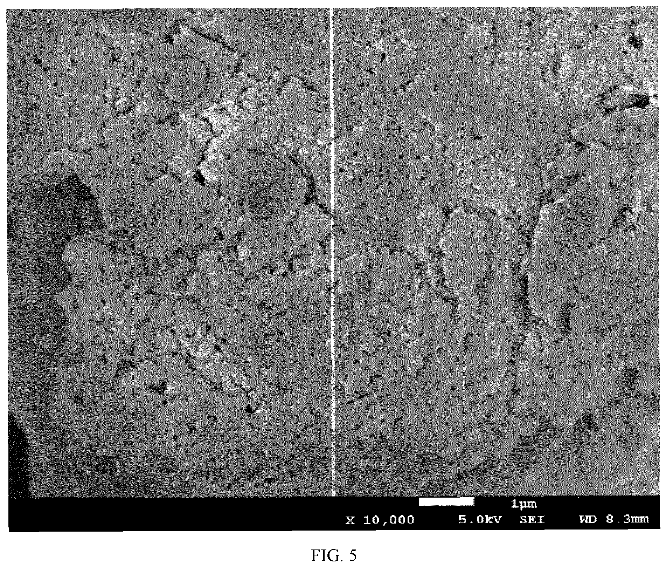

FIG. 5 shows a scanning electron micrograph of a cementing material according to Comparative Example 1 of the present invention, which is crushed to a particle size of less than 0.075 mm and aged for 150 days.

### DETAILED DESCRIPTION OF THE EMBODIMENTS

Examples 1 and 5 do not form a part of the invention.

The present invention provides a low-pH value cementing material suitable for the construction of a high-level radioactive waste disposal repository, the pH value of the low-pH value cementing material being reduced to less than or equal to 11 within 150 days, which comprises the following components in parts by weight: 60-65 parts of common Portland cement, 0-12 parts of aggregate being fly ash or ground granulated blast furnace slag, 25-35 parts of silica fumes, 3-6 parts of a pH value regulator, and 0.7-1.5 parts of a water-reducing admixture being a naphthalene-based high-efficiency water-reducing admixture with a water reducing effect of not less than 20%.

In the present invention, the low-pH value cementing material comprises 60-65 parts of the common Portland cement, preferably 61-64 parts, and more preferably 62-63 parts;
in the present invention, the low-pH value cementing material comprises 0-12 parts of the aggregate being fly ash or ground granulated blast furnace slag, preferably 5-10 parts, and more preferably 6-8 parts;
in the present invention, the low-pH value cementing material comprises 25-35 parts of the silica fumes, preferably 26-30 parts, and more preferably 27-29 parts;
in the present invention, the low-pH value cementing material comprises 3-6 parts of the pH value regulator, preferably 4-5 parts, and more preferably 4.5 parts; and
in the present invention, the low-pH value cementing material comprises 0.7-1.5 parts of the water-reducing admixture being a naphthalene-based high-efficiency water-reducing admixture with a water reducing effect of not less than 20%, preferably 0.8-1.2 parts, and more preferably 0.9-1.2 parts.

In the present invention, the pH value regulator comprises the following components: nano-silicon dioxide, anhydrous powdery calcium chloride, aluminum potassium sulfate dodecahydrate, and calcium stearate;
The mass ratio of the nano-silicon dioxide, the anhydrous powdery calcium chloride, the aluminum potassium sulfate dodecahydrate, and the calcium stearate is preferably 50-60:20-25:10-15:2-4, and more preferably 55-58:22-23:11-14:3.

In the present invention, the purity of the nano-silicon dioxide is preferably greater than or equal to 99%, and more preferably greater than or equal to 99.9%; the particle size of the nano-silicon dioxide is preferably 15-30 nm, and more preferably 20-25 nm; the purity of the anhydrous powdery calcium chloride is preferably greater than or equal to 90%, and more preferably greater than or equal to 95%; the purity of the aluminum potassium sulfate dodecahydrate is preferably greater than or equal to 99%, and more preferably greater than or equal to 99.9%; and the calcium stearate preferably contains 6-7% of calcium, and more preferably contains 6.5% of calcium.

In the present invention, the silica in the silica fumes has a content of not less than 95%.

In the present invention, the fly ash is Grade I Class C fly ash, and the ground granulated blast furnace slag is Class S105 ground granulated blast furnace slag;
in the present invention, the fluidity and the strength of the cementing material can be adjusted by adjusting the mixing proportion of the fly ash and the ground granulated blast furnace slag.

The present invention further provides a preparation method for the low-pH value cementing material suitable for the construction of a high-level radioactive waste disposal repository, the pH value of the low-pH value cementing material being reduced to less than or equal to 11 within 150 days, which comprises the following steps:
(1) mixing the pH value regulator and silica fumes to obtain a first mixture, wherein the pH value regulator comprises the following components: nano-silicon dioxide, anhydrous powdery calcium chloride, aluminum potassium sulfate dodecahydrate, and calcium stearate, wherein the nano-silicon dioxide, the anhydrous powdery calcium chloride, the aluminum potassium sulfate dodecahydrate, and the calcium stearate are in a mass ratio of 50-60:20-25:10-15:2-4;
(2) mixing the water-reducing admixture being a naphthalene-based high-efficiency water-reducing admixture with a water reducing effect of not less than 20%, the common Portland cement, the aggregate being fly ash or ground granulated blast furnace slag, and water to obtain a second mixture; and
(3) adding the first mixture into the second mixture in 2-3 times, mixing, and curing to obtain the low-pH value cementing material.

In the present invention, in the step (2), the addition amount of water is greater than or equal to 40% of the mass of the common Portland cement, the aggregate being fly ash or ground granulated blast furnace slag, the silica fumes, the pH value regulator, and the water-reducing admixture.

In the present invention, in the step (3), the humidity of the curing is greater than or equal to 95%; the curing temperature is 18-22 °C; the curing time is greater than or equal to 28 days.

In the present invention, the required age that the pH value of the cementing material is reduced to less than or equal to 11 is adjusted by adjusting the addition amount of the silica fumes and pH value regulator.

The raw materials and the amounts thereof used for the cementing materials described in Examples 1 to 5 and Comparative Examples 1 to 2 are shown in Table 1.

**Table 1. Raw materials and amounts thereof used in Examples 1 to 5 and Comparative Examples 1 to 2**

| No. | Raw materials and amounts thereof |
|---|---|
| Example 1 | 60 parts of common Portland cement, 35 parts of silica fumes, 5 parts of a pH value regulator, and 1.5 parts of a water-reducing admixture; wherein the pH value regulator comprises nano-silicon dioxide, anhydrous powdery calcium chloride, aluminum potassium sulfate dodecahydrate, and calcium stearate in a mass ratio of 55:20:12:3 |
| Example 2 | 60 parts of common Portland cement, 30 parts of silica fumes, 6 parts of fly ash, 4 parts of a pH value regulator, and 1.2 parts of a water-reducing admixture; wherein the pH value regulator comprises nano-silicon dioxide, anhydrous powdery calcium chloride, aluminum potassium sulfate dodecahydrate, and calcium stearate in a mass ratio of 50:21:12:3 |
| Example 3 | 60 parts of common Portland cement, 25 parts of silica fumes, 10 parts of fly ash, 5 parts of a pH value regulator, and 0.7 parts of a water-reducing admixture; wherein the pH value regulator comprises nano-silicon dioxide, anhydrous powdery calcium chloride, aluminum potassium sulfate dodecahydrate, and calcium stearate in a mass ratio of 58:21:13:2 |
| Example 4 | 60 parts of common Portland cement, 25 parts of silica fumes, 10 parts of ground granulated blast furnace slag, 5 parts of a pH value regulator, and 0.9 parts of a water-reducing admixture; wherein the pH value regulator comprises nano-silicon dioxide, anhydrous powdery calcium chloride, aluminum potassium sulfate dodecahydrate, and calcium stearate in a mass ratio of 58:23:14:3 |
| Example 5 | 65 parts of common Portland cement, 30 parts of silica fumes, 5 parts of a pH value regulator, and 1.4 parts of a water-reducing admixture; wherein the pH value regulator comprises nano-silicon dioxide, anhydrous powdery calcium chloride, aluminum potassium sulfate dodecahydrate, and calcium stearate in a mass ratio of 60:25:15:4 |
| Comparative Example 1 | 60 parts of common Portland cement, 40 parts of silica fumes, and 1.5 parts of a water-reducing admixture |
| Comparative Example 2 | 100 parts of common Portland cement |

the preparation method of the cementing material described in Examples 1 to 3 and Comparative Examples 1 to 2 comprises the following steps:
(1) mixing the pH value regulator and silica fumes to obtain a first mixture;
(2) mixing the water-reducing admixture, the common Portland cement, the aggregate being fly ash or ground granulated blast furnace slag, and water to obtain a second mixture; and
(3) adding the first mixture into the second mixture in 3 times, mixing, and curing for 28 days under the conditions that the humidity was greater than or equal to 95% and the temperature was 22 °C to obtain the low-pH value cementing material;
wherein the addition amount of the water was 50% of the mass of the common Portland cement, the aggregate being fly ash or ground granulated blast furnace slag, the silica fumes, the pH value regulator, and the water-reducing admixture.

The preparation method of the cementing material described in Example 4 to 5 comprises the following steps:
(1) mixing the pH value regulator and silica fumes to obtain a first mixture;
(2) mixing the water-reducing admixture, the common Portland cement, the aggregate being fly ash or ground granulated blast furnace slag, and water to obtain a second mixture; and
(3) adding the first mixture into the second mixture in 2 times, mixing, and curing for 28 days under the conditions that the humidity was greater than or equal to 95% and the temperature was 22 °C to obtain the low-pH value cementing material;
wherein the addition amount of the water was 80% of the mass of the common Portland cement, the aggregate being fly ash or ground granulated blast furnace slag, the silica fumes, the pH value regulator, and the water-reducing admixture.

The method for measuring the pH value of the cementing materials described in Examples 1 to 5 and Comparative Examples 1 to 2 comprises the following steps:
a. preparing specimens according to the foregoing ratio, curing the specimens in an environment with a relative humidity of greater than or equal to 95% and a temperature of 20±2 °C, and measuring the pH values of three samples of each specimen during testing;
b. when the pH value was measured, firstly, drying a sample in the shade, grinding and grinding the sample, weighing 10 g of powder, putting the powder into a glass bottle with a cover and a volume of 125 mL, and adding 100 mL of distilled water at a temperature of 20±2 °C (in the solid-to-water ratio of 1:10);
c. sealing the glass bottle, stirring the glass bottle on a magnetic stirrer at a high speed for 30 min at a temperature of 20±2 °C, standing the glass bottle for 15-20 min, and immediately filtering the glass bottle by using a dry filter paper; and
d. immediately measuring the pH value of the filtrate after the mixed solution was filtered, wherein the difference between the pH value measurement result of three samples of the same specimen and the average value was less than 0.1, otherwise, measuring the pH value measurement result again.

The strength of the cementing materials described in Examples 1 to 5 and Comparative Examples 1 to 2 was measured according to the Method of testing cements-Determination of strength (GB/T17671), namely, 1 part of a cementing material, 3 parts of ISO standard sand, and 0.5 parts of water were used to prepare a cementing material, and the compressive strength of the specimen was measured after curing under standard conditions.

The measurement results of the pH value and compressive strength of the cementing materials described in Examples 1 to 5 and Comparative Examples 1 to 2 are shown in Table 2.

**Table 2. Measurement results of pH values and compressive strengths of the cementing materials described in Examples 1 to 5 and Comparative Examples 1 to 2**

| No. | pH value | | | | Compressive strength of cementing material (MPa) | | |
|---|---|---|---|---|---|---|---|
| | Day 28 | Day 90 | Day 120 | Day 150 | Day 3 | Day 7 | Day 28 |
| Example 1 | 11.30-11.40 | 10.87-10.95 | 10.65-10.73 | 10.59-10.65 | 22.0 | 33.7 | 49.5 |
| Example 2 | 11.51-11.60 | 11.05-11.14 | 10.92-10.95 | 10.85-10.90 | 19.4 | 32.5 | 47.7 |
| Example 3 | 11.64-11.70 | 11.18-11.24 | 11.03-11.12 | 10.90-10.95 | 20.7 | 33.9 | 47.8 |
| Example 4 | 11.69-11.75 | 11.25-11.30 | 11.10-11.15 | 10.95-11.02 | 27.6 | 32.2 | 49.2 |
| Example 5 | 11.62-11.66 | 11.12-11.1 7 | 11.02-11.07 | 10.89-10.94 | 17.7 | 31.9 | 48.2 |
| Comparative Example 1 | 11.65-11.75 | 11.25-11.3 4 | 11.08-11.15 | 10.89-10.95 | 16.3 | 29.4 | 48.6 |
| Comparative Example 2 | 12.45-12.5 5 | 12.45-12.5 5 | 12.43-12.50 | 12.44-12.52 | 22.8 | 32.6 | 44.6 |

It can be seen from the measurement results in Table 2:
(1) For Example 1, compared with Comparative Example 1, the common Portland cement addition proportion in the cementing material is unchanged (60% by weight), 5% by weight of the pH value regulator is used to replace silica fumes, the pH value of the material can be reduced to about 11.30 at day 28, and the pH value can be reduced to less than or equal to 11 at day 90, and the age is shortened by 40%; the early compressive strength is significantly increased, specifically, the compressive strength at day 3 is increased to 22.0 MPa from 16.3 MPa, the compressive strength is increased by 35%, the compressive strength at day 7 is increased to 33.7 MPa from 29.4 MPa, the compressive strength is increased by 14.6%, and the compressive strength at day 28 is slightly increased; and compared with Comparative Example 2, the compressive strength of the cementing material in Example 1 is not substantially lost at day 3 and day 7, the compressive strength at day 28 is increased from 44.6 MPa to 49.5 MPa, and the compressive strength is increased by 11%.
(2) For Example 3, compared with Comparative Example 1, the addition proportion in the cementing material is unchanged (60% by weight), 5% by weight of the pH value regulator and 10% of fly ash are used to replace the silica fumes, so that the addition proportion of the silica fumes in the cementing material is reduced from 40% to 25%, the pH value of the material is also reduced to less than or equal to 11 at about day 150, however, the early compressive strength is significantly increased, the addition amount of the water-reducing admixture is reduced from 1.5% to 0.7%, the compressive strength at day 3 is increased from 16.3 MPa to 20.7 MPa, the compressive strength is increased by 27.0%, the compressive strength at day 7 is increased from 29.4 MPa to 33.9 MPa, the compressive strength is increased by 15.3%, and the compressive strength at day 28 is basically the same; compared with Comparative Example 2, the cementing material in Example 3 has a slightly lower compressive strength at day 3 with a reduction rate of less than 10%, and the compressive strength at day 7 and day 28 is slightly increased.
(3) For example 4, compared with Comparative Example 1, the addition proportion of the cementing material is unchanged (60% by weight), 5% by weight of the pH value regulator and 10% by weight of the ground granulated blast furnace slag are used to replace the silica fumes, so that the addition proportion of the silica fumes in the cementing material is reduced from 40% to 25%, the pH value of the material is also reduced to less than or equal to 11 at about day 150, however, the early compressive strength of the material is greatly increased and is increased from 16.3 MPa to 27.6 MPa; compared with Comparative Example 2, the compressive strength of the cementing material in Example 4 at day 3 is still significantly increased from 22.8 MPa to 27.6 MPa, and the compressive strength is increased by 21.1%.

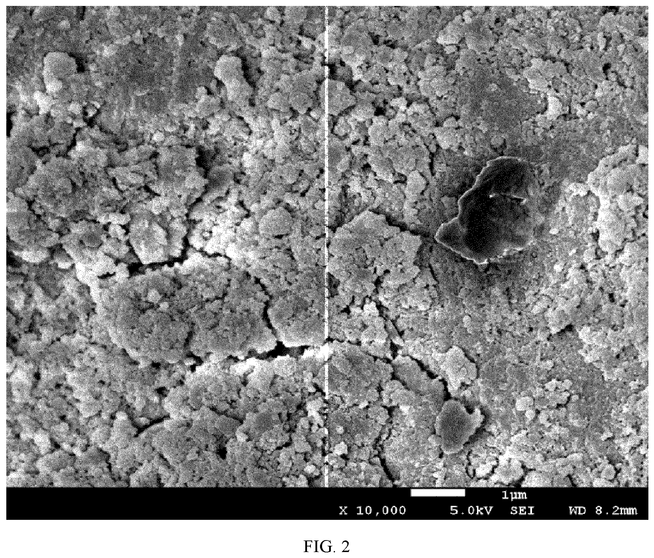

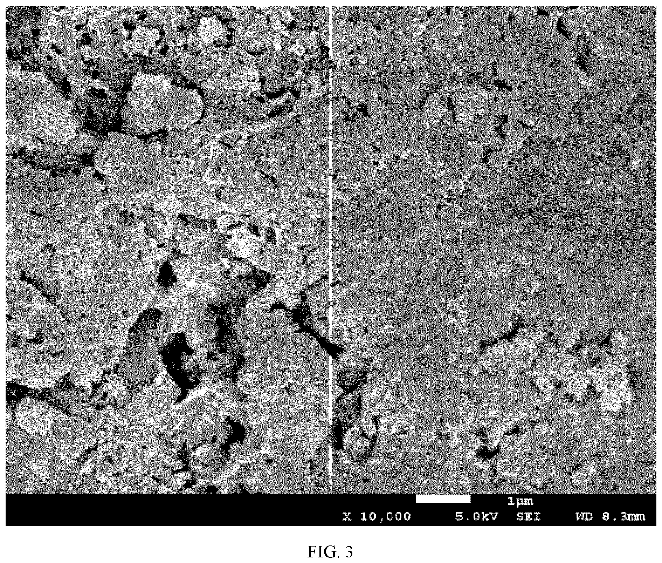

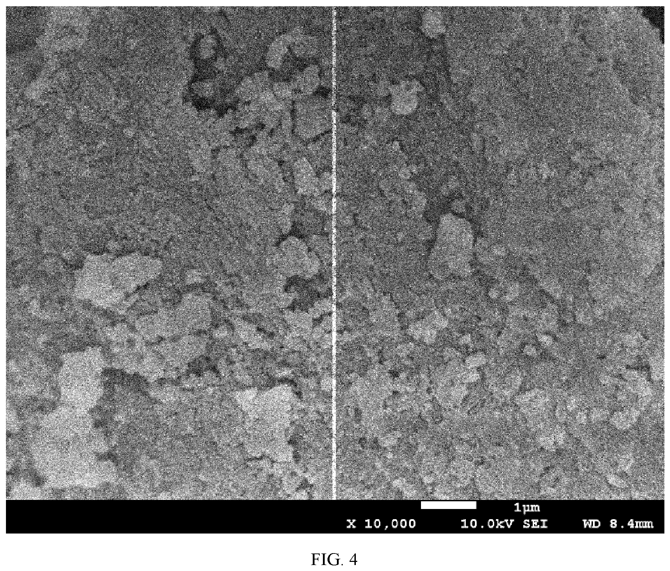

It can be seen from FIGs. 2 to 4 that the hydrated products of the cementing material obtained by the present invention are all dense hydrated calcium silicate (C-S-H) gels, and Ca(OH)₂ crystals (hexagonal plates) are not found.

The low-pH value cementing material for the high-level radioactive waste disposal repository provided by the present invention can adapt to different parts and functional requirements by changing the ratio. For example, the cementing material in Example 1 can be used in a high-level radioactive waste disposal roadway plugging body which has high requirements on the reduction speed of the pH value of the material and low requirements on the strength; and the cementing material in Example 3 can be used in cracked rock grouting impervious materials which have low requirements on pH value reduction time but have high requirements on fluidity.

The above descriptions are only preferred examples of the present invention, which is defined in the claims. It should be noted that those of ordinary skill in the art can also make several improvements and modifications without departing from the principle of the present invention, and such improvements and modifications shall fall within the protection scope of the present invention, which is defined in the claims.

## Claims

1. A low-pH value cementing material suitable for the construction of a high-level radioactive waste disposal repository, the low-pH value cementing material comprising the following components in parts by weight: 60-65 parts of common Portland cement, 0-12 parts of aggregate being fly ash or ground granulated blast furnace slag, 25-35 parts of silica fumes, 3-6 parts of a pH value regulator, and 0.7-1.5 parts of a water-reducing admixture being a naphthalene-based high-efficiency water-reducing admixture with a water reducing effect of not less than 20%;
the pH value of the low-pH value cementing material being reduced to less than or equal to 11 within 150 days,
wherein the pH value regulator comprises the following components: nano-silicon dioxide, anhydrous powdery calcium chloride, aluminum potassium sulfate dodecahydrate, and calcium stearate, wherein the nano-silicon dioxide, the anhydrous powdery calcium chloride, the aluminum potassium sulfate dodecahydrate, and the calcium stearate are in a mass ratio of 50-60:20-25:10-15:2-4.

2. The low-pH value cementing material according to claim 1, wherein the nano-silicon dioxide has a purity of greater than or equal to 99%, and the nano-silicon dioxide has a particle size of 15-30 nm; the anhydrous powdery calcium chloride has a purity of greater than or equal to 90%; the aluminum potassium sulfate dodecahydrate has a purity of greater than or equal to 99%; and the calcium stearate has a calcium content of 6% to 7%.

3. The low-pH value cementing material according to claim 1, wherein the silica in the silica fumes has a content of not less than 95%.

4. The low-pH cementing material according to claim 3, wherein the fly ash is of Grade I Class C and the ground granulated blast furnace slag is of Class S105.

5. A preparation method for the low-pH value cementing material according to any one of claims 1 to 4, comprising the following steps:
(1) mixing the pH value regulator and silica fumes to obtain a first mixture, wherein the pH value regulator comprises the following components: nano-silicon dioxide, anhydrous powdery calcium chloride, aluminum potassium sulfate dodecahydrate, and calcium stearate, wherein the nano-silicon dioxide, the anhydrous powdery calcium chloride, the aluminum potassium sulfate dodecahydrate, and the calcium stearate are in a mass ratio of 50-60:20-25:10-15:2-4;
(2) mixing the water-reducing admixture being a naphthalene-based high-efficiency water-reducing admixture with a water reducing effect of not less than 20%, the common Portland cement, the aggregate being fly ash or ground granulated blast furnace slag, and water to obtain a second mixture; and
(3) adding the first mixture into the second mixture in 2-3 times, mixing, and curing to obtain the low-pH value cementing material.

## Patentansprüche

1. Ein niedrig-pH-wertiges Zementierungsmaterial, geeignet für den Bau eines Endlagers für hochradioaktive Abfälle, wobei das niedrig-pH-wertige Zementierungsmaterial die folgenden Komponenten in Teilen nach Gewicht umfasst: 60-65 Teile gewöhnlicher Portlandzement, 0-12 Teile Zuschlagstoff, der Flugasche oder gemahlene granulierte Hochofenschlacke ist, 25-35 Teile Silicastaub, 3-6 Teile eines pH-Wert-Reglers und 0,7-1,5 Teile eines wasserreduzierenden Zusatzmittels, das ein naphthalinsulfonatbasiertes hocheffizientes Wasserreduzierungsadditiv mit einem Wasserreduzierungseffekt von nicht weniger als 20 % ist;
wobei der pH-Wert des niedrig-pH-wertigen Zementierungsmaterials innerhalb von 150 Tagen auf weniger als oder gleich 11 abgesenkt ist,
wobei der pH-Wert-Regler die folgenden Komponenten umfasst: Nano-Siliciumdioxid, wasserfreies pulverförmiges Calciumchlorid, Aluminiumkaliumsulfat-Dodecahydrat und Calciumstearat, wobei das Nano-Siliciumdioxid, das wasserfreie pulverförmige Calciumchlorid, das Aluminiumkaliumsulfat-Dodecahydrat und das Calciumstearat in einem Massenverhältnis von 50-60:20-25:10-15:2-4 vorliegen.

2. Das niedrig-pH-wertige Zementierungsmaterial nach Anspruch 1, wobei das Nano-Siliciumdioxid eine Reinheit von größer oder gleich 99 % aufweist und das Nano-Siliciumdioxid eine Teilchengröße von 15-30 nm aufweist; das wasserfreie pulverförmige Calciumchlorid eine Reinheit von größer oder gleich 90 % aufweist; das Aluminiumkaliumsulfat-Dodecahydrat eine Reinheit von größer oder gleich 99 % aufweist; und das Calciumstearat einen Calciumgehalt von 6 % bis 7 % aufweist.

3. Das niedrig-pH-wertige Zementierungsmaterial nach Anspruch 1, wobei das Siliciumdioxid im Silicastaub einen Gehalt von nicht weniger als 95 % aufweist.

4. Das niedrig-pH-wertige Zementierungsmaterial nach Anspruch 3, wobei die Flugasche von Grad I Klasse C ist und die gemahlene granulierte Hochofenschlacke von Klasse S105 ist.

5. Herstellungsverfahren für das niedrig-pH-wertige Zementierungsmaterial nach einem der Ansprüche 1 bis 4, umfassend die folgenden Schritte:
(1) Mischen des pH-Wert-Reglers und des Silikastaubs zum Erhalten eines ersten Gemisches, wobei der pH-Wert-Regler die folgenden Komponenten umfasst: Nano-Siliciumdioxid, wasserfreies pulverförmiges Calciumchlorid, Aluminiumkaliumsulfat-Dodecahydrat und Calciumstearat, wobei das Nano-Siliciumdioxid, das wasserfreie pulverförmige Calciumchlorid, das Aluminiumkaliumsulfat-Dodecahydrat und das Calciumstearat in einem Massenverhältnis von 50-60:20-25:10-15:2-4 vorliegen;
(2) Mischen des wasserreduzierenden Zusatzmittels, das ein naphthalinsulfonatbasiertes hocheffizientes Wasserreduzierungsadditiv mit einem Wasserreduzierungseffekt von nicht weniger als 20 % ist, des gewöhnlichen Portlandzements, des Zuschlagstoffs, der Flugasche oder gemahlene granulierte Hochofenschlacke ist, und Wassers zum Erhalten eines zweiten Gemisches; und
(3) Zugeben des ersten Gemisches zum zweiten Gemisch in 2-3 Portionen, Mischen und Aushärten zum Erhalten des niedrig-pH-wertigen Zementierungsmaterials.

## Revendications

1. Matériau de cimentation à faible valeur de pH adapté pour la construction d'un dépôt d'élimination de déchets hautement radioactifs, le matériau de cimentation à faible valeur de pH comprenant les composants suivants en parties en poids : 60-65 parties de ciment Portland ordinaire, 0-12 parties d'agrégat l'agrégat qui est constitué par des cendres volantes ou du laitier de haut fourneau granulé broyé, 25-35 parties de fumées de silice, 3-6 parties d'un régulateur de valeur de pH, et 0,7-1,5 parties d'un adjuvant réducteur d'eau qui est un adjuvant réducteur d'eau à rendement élevé à base de naphtalène avec un effet de réduction d'eau qui n'est pas inférieur à 20 % ;
la valeur de pH du matériau de cimentation à faible valeur de pH étant réduite à une valeur inférieure ou égale à 11 en 150 jours,
dans lequel le régulateur de valeur de pH comprend les composants suivants : dioxyde de silicium nanométrique, chlorure de calcium en poudre anhydre, dodécahydrate de sulfate de potassium d'aluminium, et stéarate de calcium, dans lequel le dioxyde de silicium nanométrique, le chlorure de calcium en poudre anhydre, le dodécahydrate de sulfate de potassium d'aluminium, et le stéarate de calcium sont dans un rapport massique de 50-60:20-25:10-15:2-4.

2. Matériau de cimentation à faible valeur de pH selon la revendication 1, dans lequel le dioxyde de silicium nanométrique présente une pureté supérieure ou égale à 99 %, et le dioxyde de silicium nanométrique présente une taille de particule de 15-30 nm ; le chlorure de calcium en poudre anhydre présente une pureté supérieure ou égale à 90 % ; le dodécahydrate de sulfate de potassium d'aluminium présente une pureté supérieure ou égale à 99 % ; et le stéarate de calcium présente une teneur en calcium de 6 % à 7 %.

3. Matériau de cimentation à faible valeur de pH selon la revendication 1, dans lequel la silice dans les fumées de silice présente une teneur qui n'est pas inférieure à 95 %.

4. Matériau de cimentation à faible pH selon la revendication 3, dans lequel les cendres volantes sont de Degré 1 de la Classe C et le laitier de haut fourneau granulé broyé est de Classe S105.

5. Procédé de préparation du matériau de cimentation à faible valeur de pH selon l'une quelconque des revendications 1 à 4, comprenant les étapes suivantes :
(1) mélange du régulateur de valeur de pH et des fumées de silice pour obtenir un premier mélange, dans lequel le régulateur de valeur de pH comprend les composants suivants : dioxyde de silicium nanométrique, chlorure de calcium en poudre anhydre, dodécahydrate de sulfate de potassium d'aluminium, et stéarate de calcium, dans lequel le dioxyde de silicium nanométrique, le chlorure de calcium en poudre anhydre, le dodécahydrate de sulfate de potassium d'aluminium, et le stéarate de calcium sont dans un rapport massique de 50-60:20-25:10-15:2-4 ;
(2) mélange de l'adjuvant réducteur d'eau qui est un adjuvant réducteur d'eau à rendement élevé à base de naphtalène avec un effet de réduction d'eau qui n'est pas inférieur à 20%, du ciment Portland ordinaire, de l'agrégat qui est constitué par des cendres volantes ou du laitier de haut fourneau granulé broyé et de l'eau pour obtenir un deuxième mélange ; et
(3) ajout du premier mélange dans le deuxième mélange en 2-3 fois, mélange et durcissement pour obtenir le matériau de cimentation à faible valeur de pH.
